# FASCICULE DE BREVET EUROPEEN

(11) **EP 1 760 404 B1**
(45) Date de publication et mention de la délivrance du brevet: **16.07.2008**
(21) Numéro de dépôt: 06291335.5
(22) Date de dépôt: 22.08.2006
(51) Int. Cl.: F23R 3/60

(54) **Chambre de combustion d'une turbomachine**
Brennkammer einer Gasturbine
Combustion chamber of a gas turbine

(30) Priorité: 31.08.2005 FR 0508891
(43) Date de publication de la demande: 07.03.2007
(73) Titulaire: SNECMA, 75015 Paris (FR)
(72) Inventeur: Kreder, Olivier, 77930 Chailly en Biere (FR); Parent, Delphine, 92120 Montrouge (FR); Sevi, Guillaume, 94200 Ivry sur Seine (FR)
(74) Mandataire: Ramey, Daniel

(56) Documents cités:
- EP-A- 1 265 037
- EP-A- 1 593 913
- FR-A- 2 356 000
- US-A- 6 131 384

## Description

La présente invention concerne une chambre de combustion d'une turbomachine, telle qu'un turboréacteur ou un turbopropulseur d'avion.

Une telle chambre de combustion comprend une paroi de fond de chambre qui porte des systèmes d'injection de carburant et qui est formée avec des orifices d'entrée d'air, cette paroi de fond de chambre étant reliée par des parois de révolution interne et externe à des brides annulaires interne et externe de fixation sur des carters interne et externe de la turbomachine, par l'intermédiaire de moyens du type vis-écrou ou analogues. Une telle chambre est connue de EP 1 265 037 A.

En fonctionnement, une partie du débit d'air fourni par un compresseur d'alimentation de la chambre de combustion, doit contourner la chambre de combustion pour aller refroidir des composants situés en aval de cette chambre et pour cela passe à travers des orifices formés dans les brides interne et externe de la chambre.

Ces orifices sont réalisés par usinage dans des parties annulaires des brides centrées sur l'axe de la chambre et sont usuellement de forme rectangulaire ou circulaire.

Les orifices de forme rectangulaire permettent de réduire davantage la masse et d'offrir une plus grande section de passage d'air. Cependant, ces brides formées avec des orifices rectangulaires ont une moins bonne résistance aux contraintes vibratoires, alors que les brides comportant des orifices de forme circulaire ont une meilleure tenue vibratoire, mais offrent une section de passage d'air plus faible avec une augmentation de la perte de charge au passage de l'air de refroidissement des composants situés en aval.

L'invention a notamment pour but d'apporter une solution simple, efficace et économique à ce problème, en combinant les avantages de ces deux solutions connues et en évitant leurs inconvénients.

Elle propose à cet effet une chambre de combustion d'une turbomachine, telle qu'un turboréacteur ou un turbopropulseur d'avion, comprenant un fond de chambre équipé de moyens d'injection de carburant et des parois de révolution reliant le fond de chambre à des brides interne et externe de fixation à des carters interne et externe, ces brides comportant des parties annulaires percées par des orifices de passage d'air pour le refroidissement de composants en aval, ces orifices étant de forme triangulaire ou sensiblement triangulaire, caractérisée en ce que les orifices d'au moins une des brides sont disposés en quinconce .

L'invention permet à la ou chaque bride formée avec des orifices triangulaires d'offrir une grande section de passage d'air et d'avoir une masse faible comme une bride comportant des orifices rectangulaires, tout en ayant une bonne tenue vibratoire et une bonne raideur circonférentielle comme une bride à orifices circulaires.

Les formes et dimensions des orifices triangulaires et leur agencement dans les parties annulaires des brides sont optimisés pour répondre de manière efficace aux objectifs suivants :
- une section de passage d'air maximale et une perte de charge minimale,
- une bonne résistance aux contraintes vibratoires et une bonne raideur circonférentielle,
- une masse de bride réduite,
- l'usinage simple et facile des orifices sur la bride.

Les orifices triangulaires peuvent être des triangles isocèles, équilatéraux ou de forme quelconque et sont préférentiellement à sommets arrondis afin de réduire les concentrations de contraintes aux sommets des orifices triangulaires.

Les orifices triangulaires successifs sont avantageusement disposés en quinconce et tête-bêche de manière à optimiser la section de passage d'air et réduire la masse. Dans cette configuration, les orifices triangulaires sont séparés les uns des autres par une bande de matière qui s'étend en zigzag entre les bords interne et externe de la partie annulaire de la bride, ce qui permet d'augmenter la raideur circonférentielle de la bride par rapport à une bride percée d'orifices rectangulaires dans laquelle les bandes de matière séparant les orifices s'étendent radialement entre les bords interne et externe de la partie annulaire de bride.

Dans un mode de réalisation de l'invention répondant aux objectifs précités, les orifices triangulaires d'une bride comprennent deux rangées d'orifices triangulaires identiques, dans lesquelles les orifices ont chacun une base située sur une circonférence centrée sur l'axe de la chambre, les orifices étant inversés d'une rangée à l'autre et les deux rangées étant partiellement imbriquées l'une dans l'autre.

Pour que la bride formée avec des orifices triangulaires ait une raideur circonférentielle suffisante, la distance circonférentielle entre les bases des orifices triangulaires d'une même rangée doit être supérieure ou égale à 1,5 fois la largeur de la bande de matière séparant deux orifices triangulaires successifs.

Le degré d'imbrication partielle des deux rangées est déterminé par le rapport H₂ / H₁, où H₁ est la distance entre la base d'un orifice triangulaire et son sommet, et H₂ est la distance radiale entre les sommets de deux orifices successifs, opposés à leurs bases, ce rapport H₂ / H₁ devant être supérieur ou égal à 0,6 pour optimiser la section de passage d'air.

La longueur de la partie rectiligne de la bande de matière entre les sommets arrondis de deux orifices successifs doit être inférieure ou égale à trois fois la largeur de cette bande afin que la bride ait une bonne tenue mécanique en flexion.

L'angle au sommet des orifices triangulaires, à l'opposé de leur base, doit être supérieur ou égal à 20°.

Les bases des orifices sont séparées des bords interne et externe de la partie annulaire de bride par des bandes de matière à orientation circonférentielle dont les largeurs radiales sont définies par a ≥ d et b ≤ H₂, où a est la largeur radiale de la bande de matière entre la base d'un orifice triangulaire de la rangée externe et le bord externe de la partie annulaire de bride, d est la largeur de la bande de matière séparant des orifices successifs, b est la largeur de la bande de matière entre la base d'un orifice triangulaire de la rangée interne et le bord interne de la partie annulaire de bride, et H₂ est la distance radiale entre les sommets de deux orifices successifs, opposés à leurs bases.

L'invention concerne également une turbomachine, telle qu'un turboréacteur ou un turbopropulseur d'avion, caractérisée en ce qu'elle comprend une chambre de combustion du type décrit ci-dessus.

L'invention sera mieux comprise et d'autres caractéristiques, détails et avantages de celle-ci apparaîtront plus clairement à la lecture de la description qui suit, faite à titre d'exemple non limitatif en référence aux dessins annexés dans lesquels :
- la figure 1 est une demi-vue schématique en coupe axiale d'un diffuseur et d'une chambre de combustion d'une turbomachine ;
- la figure 2 est une vue schématique partielle en perspective d'une chambre de combustion d'une turbomachine selon un mode de réalisation de l'invention ;
- la figure 3 est une vue partielle de face de la chambre de combustion de la figure 2 ; et
- la figure 4 est une vue partielle de face de la bride annulaire interne de la chambre de combustion de la figure 2.

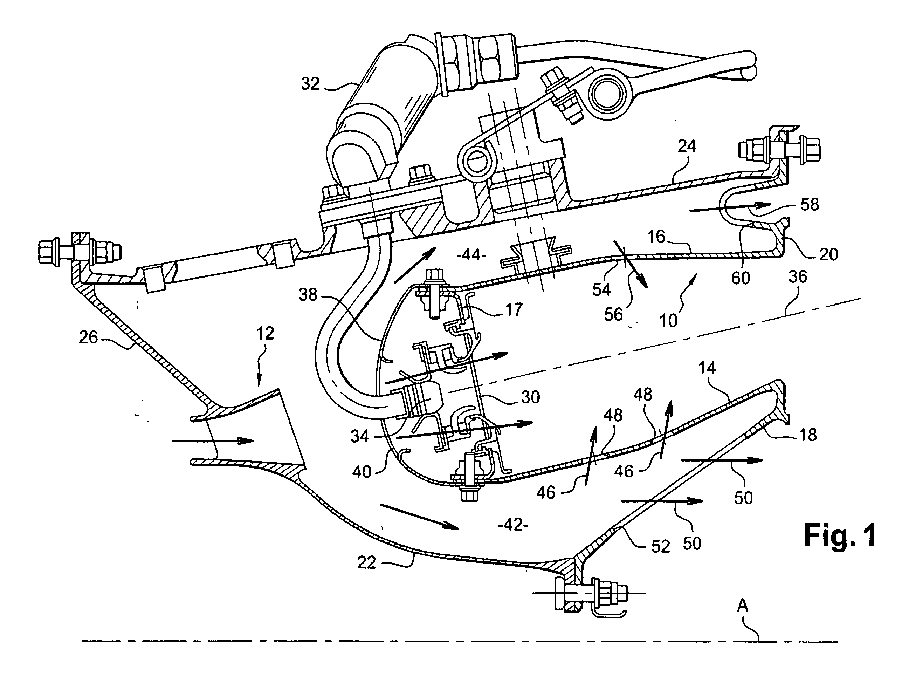

En figure 1, la chambre de combustion 10 est agencée en sortie d'un diffuseur 12, lui même situé en sortie d'un compresseur, non représenté, et comprend une paroi interne 14 de révolution et une paroi externe 16 de révolution reliées en amont à une paroi annulaire 17 de fond de chambre et fixées en aval par des brides annulaires interne 18 et externe 20 respectivement sur un voile tronconique interne 22 du diffuseur, et sur une extrémité aval d'un carter externe 24 de la chambre, l'extrémité amont de ce carter 24 étant fixée sur un voile tronconique externe 26 du diffuseur.

La paroi 17 de fond de chambre comporte des orifices 30 à travers lesquels passe de l'air provenant du diffuseur 12 et du carburant amené par des injecteurs 32 fixés sur le carter externe 24 et régulièrement répartis sur une circonférence autour de l'axe longitudinal A de la chambre. Chaque injecteur 32 comprend une tête 34 d'injection de carburant montée sur la paroi 17 de fond de chambre et alignée avec l'axe 36 d'un des orifices 30 de cette paroi. Un capot annulaire 38 incurvé vers l'amont est fixé sur les extrémités amont des parois 14, 16 et 17 de la chambre et comprend des orifices 40 de passage d'air alignés avec les orifices 30 de la paroi 17 de fond de chambre.

Une partie du débit d'air fourni par le compresseur et sortant du diffuseur 12 passe par les orifices 40 et 30 et alimente la chambre de combustion 10, l'autre partie du débit d'air alimentant des canaux annulaires interne 42 et externe 44 de contournement de la chambre de combustion 10.

Le canal interne 42 est formé entre le voile interne 22 du diffuseur 12 et la paroi interne 14 de la chambre, et l'air qui passe dans ce canal se partage en un débit 46 qui pénètre dans la chambre 10 par des trous 48 de la paroi interne 14 et en un débit 50 qui passe à travers des orifices 52 d'une partie annulaire tronconique de la bride interne 18 pour aller refroidir des composants, non représentés, situés en aval de cette chambre.

Le canal externe 44 est formé entre le carter externe 24 et la paroi externe 16 de la chambre, et l'air qui passe dans ce canal se partage en un débit 56 qui pénètre dans la chambre 10 par des trous 54 de la paroi externe 16 et en un débit 58 qui passe à travers des orifices 60 d'une partie annulaire incurvée en U de la bride externe 20 pour aller refroidir des composants en aval.

Les trous 48 et 54 de passage d'air de la chambre sont des trous de dilution, des trous dits primaires et des trous formés par des multiperforations.

Dans la technique connue, les orifices 52, 60 des brides 18, 20 sont de forme rectangulaire ou circulaire et ne permettent pas d'optimiser la section de passage de l'air de refroidissement et la masse des brides tout en conservant une bonne résistance aux contraintes vibratoires et une bonne raideur circonférentielle et en limitant les pertes de charge de l'écoulement d'air à travers les orifices des brides.

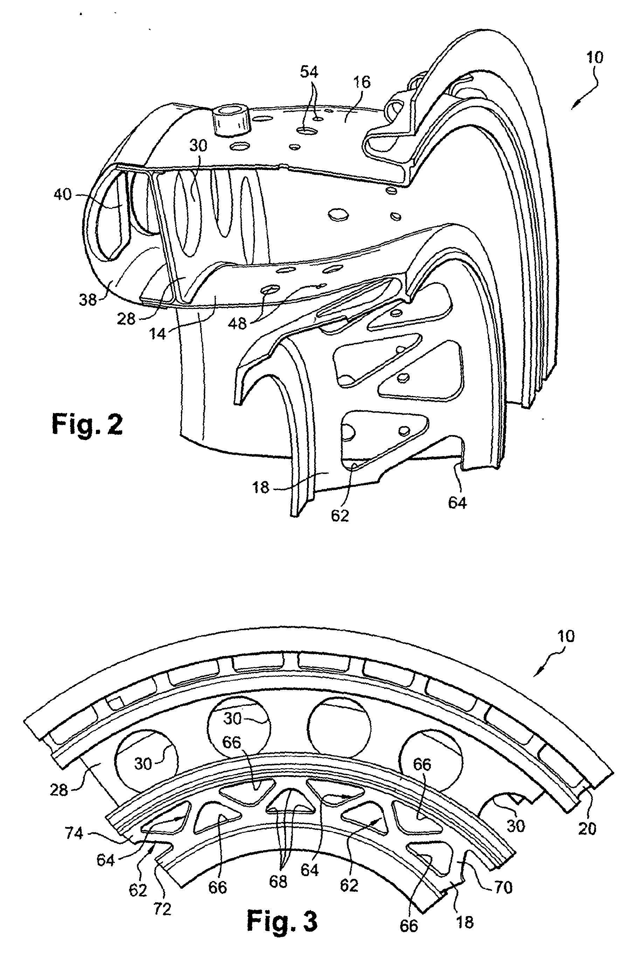

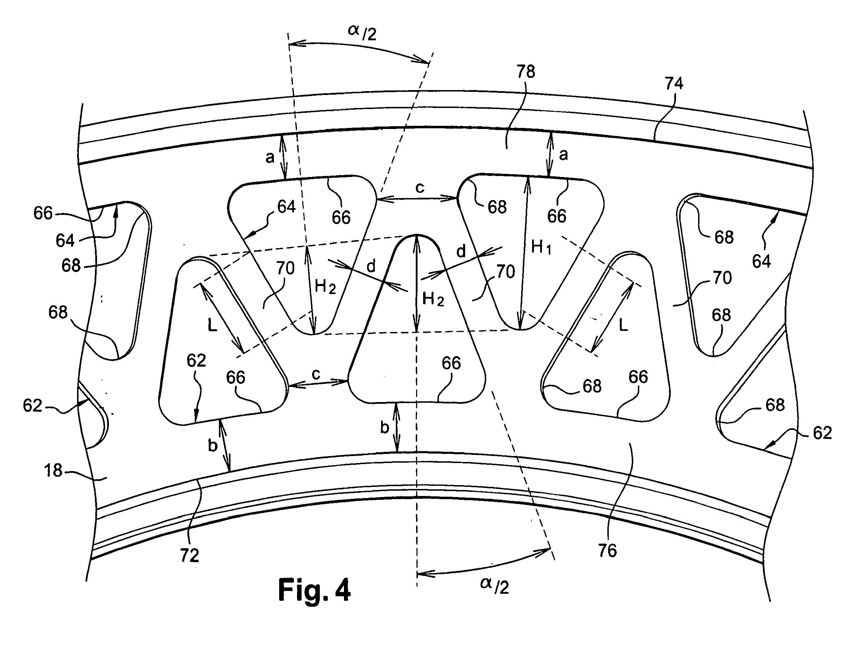

Dans la chambre de combustion selon l'invention représentée aux figures 2 à 4, la bride interne 18 comprend dans sa partie annulaire tronconique des orifices 62, 64 de forme triangulaire agencés en deux rangées annulaires coaxiales qui sont imbriquées l'une dans l'autre.

Les orifices triangulaires 62 de la rangée interne sont isocèles et ont chacun une base 66 située sur une circonférence centrée sur l'axe A de la chambre et des sommets arrondis 68, leur sommet opposé à leur base étant dirigé vers l'extérieur de la chambre.

Les orifices triangulaires 64 de la rangée externe sont identiques aux orifices 62 et sont disposés en quinconce et inversés ou tête-bêche avec les orifices 62, c'est-à-dire que la base 66 de chaque orifice 64 est située sur une circonférence externe centrée sur l'axe A de la chambre et leur sommet opposé à leur base est dirigé vers l'intérieur de la chambre.

Les deux rangées d'orifices triangulaires 62, 64 sont au moins partiellement imbriquées l'une dans l'autre et les orifices 62, 64 sont séparés les uns des autres par une bande de matière 70 qui s'étend en zigzag entre les bords interne 72 et externe 74 de la partie annulaire de bride.

On a défini des paramètres qui caractérisent les formes et les dimensions des orifices 62, 64 ainsi que leur disposition relative et qui font varier les raideurs axiale et circonférentielle de la bride 18. Ces paramètres ont été optimisés pour la bride 18 afin qu'elle puisse offrir une grande section de passage d'air tout en conservant une bonne tenue vibratoire et une bonne raideur circonférentielle et en limitant les pertes de charge au passage de l'air à travers les orifices 62, 64.

L'angle α au sommet des orifices triangulaires à l'opposé de leur base doit préférentiellement être supérieur ou égal à 20°.

La bande de matière 70 qui s'étend en zigzag entre les bords interne 72 et externe 74 de la paroi annulaire de bride comporte des parties rectilignes qui séparent les côtés parallèles des orifices 62, 64 successifs et qui relient les sommets arrondis 66 des orifices, opposés à leur base. On désigne par d et L, la largeur et la longueur de ces parties rectilignes, respectivement. Il est préférable que la longueur L soit inférieure ou égale à trois fois la distance d pour que la bride ait une bonne tenue mécanique en flexion.

On désigne par c la distance circonférentielle entre les bases des orifices triangulaires successifs d'une même rangée. Dans l'exemple représenté, cette distance est identique pour les rangées interne et externe d'orifices triangulaires. Cette distance c doit préférentiellement être supérieure ou égale à 1,5 fois la distance d précitée pour que la bride conserve une raideur circonférentielle suffisante.

H₁ désigne la hauteur d'un orifice triangulaire 62, 64, c'est-à-dire la distance entre la base 66 d'un orifice et le sommet 68 opposé à cette base, et H₂ désigne la distance radiale entre les sommets 68 de deux orifices 62, 64 successifs, opposés à leurs bases. Pour optimiser la section de passage d'air, il faut que le degré d'imbrication partielle des deux rangées déterminé par le rapport H₂ / H₁ soit supérieur ou égal à 0,6.

Les rangées interne et externe d'orifices sont séparées des bords interne 72 et externe 74 de la partie annulaire de la bride par des bandes de matière 76, 78 à orientation circonférentielle.

a et b désignent respectivement les largeurs radiales des bandes de matière 76 et 78 situés entre la base 66 d'un orifice 64 de la rangée externe et le bord externe 74 de la partie annulaire, et entre la base 66 d'un orifice 62 de la rangée interne et le bord interne 72 de la partie annulaire. La largeur a doit être supérieure ou égale à la distance d précitée, et la largeur b doit être inférieure ou égale à la distance H₂ précitée pour que la bride 18 ait une souplesse suffisante pour amortir les dilations thermiques et les déformations en fonctionnement.

La bride externe 20 peut également être percée d'orifices triangulaires 62, 64 comme la bride interne ou être la seule bride à comporter des orifices triangulaires.

D'autre part, les orifices triangulaires des brides peuvent être de forme quelconque, en étant toujours disposés en quinconce et tête-bêche, pour réduire la masse et la perte de charge.

Les orifices triangulaires des brides sont réalisables par fraisage ou découpe laser.

## Revendications

1. Chambre de combustion d'une turbomachine, telle qu'un turboréacteur ou un turbopropulseur d'avion, comprenant un fond de chambre (17) équipé de moyens d'injection de carburant et des parois de révolution (14, 16) reliant le fond de chambre (17) à des brides interne (18) et externe (20) de fixation à des carters interne et externe (24), ces brides (18, 20) comportant des parties annulaires percées par des orifices de passage d'air pour le refroidissement de composants en aval, ces orifices étant de forme triangulaire ou sensiblement triangulaire, **caractérisée en ce que** les orifices (62, 64) d'au moins une des brides (18, 20) sont disposés en quinconce.

2. Chambre de combustion selon la revendication 1, **caractérisée en ce que** les orifices triangulaires (62, 64) successifs sont disposés en quinconce et tête-bêche.

3. Chambre de combustion selon la revendication 1 ou 2, **caractérisée en ce que** les orifices triangulaires (62, 64) sont formés dans la bride interne (18).

4. Chambre de combustion selon la revendication 1 ou 2, **caractérisée en ce que** les orifices triangulaires (62, 64) sont formés dans la bride externe (20).

5. Chambre de combustion selon la revendication 1 ou 2, **caractérisée en ce que** les orifices triangulaires (62, 64) sont formés dans les brides interne (18) et externe (20).

6. Chambre de combustion selon l'une des revendications précédentes, **caractérisée en ce que** les orifices triangulaires (62, 64) sont à sommets (68) arrondis.

7. Chambre de combustion selon l'une des revendications précédentes, **caractérisée en ce que** les orifices triangulaires (62, 64) sont des triangles isocèles, équilatéraux ou de forme quelconque.

8. Chambre de combustion selon l'une des revendications précédentes, **caractérisée en ce que** les orifices triangulaires (62, 64) d'une bride (18) comprennent deux rangées d'orifices triangulaires identiques, dans lesquelles les orifices ont chacun une base (66) située sur une circonférence centrée sur l'axe (A) de la chambre, les orifices (62, 64) étant inversés d'une rangée à l'autre et les deux rangées étant partiellement imbriquées l'une dans l'autre.

9. Chambre de combustion selon la revendication 8, **caractérisée en ce que** la distance circonférentielle c entre les bases (66) des orifices triangulaires (62, 64) d'une même rangée est supérieure ou égale à 1,5 fois la largeur d de la bande de matière (70) séparant deux orifices (62, 64) successifs.

10. Chambre de combustion selon la revendication 8 ou 9, **caractérisée en ce que** le degré d'imbrication partielle des deux rangées est déterminé par le rapport H₂ / H₁, où H₁ est la distance entre la base (66) d'un orifice triangulaire et son sommet (68) opposé et H₂ est la distance radiale entre les sommets (68) de deux orifices successifs, opposés à leurs bases (66), ce rapport H₂ / H₁ étant supérieur ou égal à 0,6.

11. Chambre de combustion selon l'une des revendications 8 à 10, **caractérisée en ce que** la longueur L de la partie rectiligne de la bande de matière (70) entre les sommets arrondis (68) de deux orifices (62, 64) successifs est inférieure ou égale à trois fois la largeur d de cette bande.

12. Chambre de combustion selon l'une des revendications 8 à 11, **caractérisée en ce que** l'angle α au sommet des orifices triangulaires (62, 64), à l'opposé de leur base (66), est supérieur ou égal à 20°.

13. Chambre de combustion selon l'une des revendications 8 à 12, **caractérisée en ce que** les orifices triangulaires (62, 64) sont formés dans une partie annulaire tronconique ou radiale de la bride (18), et les bases (66) des orifices sont séparées des bords interne (72) et externe (74) de cette partie annulaire par des bandes de matière (76, 78) à orientation circonférentielle dont les largeurs sont définies par a ≥ d et b ≥ H₂, où a est la largeur radiale de la bande de matière (78) entre la base (66) d'un orifice triangulaire (64) et le bord externe (74) de la partie annulaire de bride, d est la largeur de la bande de matière (70) séparant des orifices (62, 64) successifs, b est la largeur radiale de la bande de matière (76) entre la base (66) d'un orifice triangulaire (62) et le bord interne (72) de la partie annulaire de bride, et H₂ est la distance radiale entre les sommets (68) de deux orifices (62, 64) successifs, opposés à leurs bases (66).

14. Turbomachine, telle qu'un turboréacteur ou un turbopropulseur d'avion, **caractérisée en ce qu'**elle comprend une chambre de combustion (10) selon l'une des revendications précédentes.

## Claims

1. A combustion chamber for a turbomachine, such as an aircraft turbojet or turboprop, comprising a chamber endwall (17) equipped with fuel injection means and axisymmetric walls (14, 16) connecting the chamber endwall (17) to internal and external flanges (18, 20) for fastening to internal and external casings (24), these flanges (18, 20) having annular portions pierced by orifices for the flow of air for cooling downstream components, these orifices being of triangular or approximately triangular shape, **characterized in that** the orifices (62, 64) of at least one of the flanges (18, 20) are arranged in a staggered configuration.

2. The combustion chamber as claimed in claim 1, **characterized in that** the successive triangular orifices (62, 64) are arranged in a staggered and head-to-tail configuration.

3. The combustion chamber as claimed in claim 1 or 2, **characterized in that** the triangular orifices (62, 64) are formed in the internal flange (18).

4. The combustion chamber as claimed in claim 1 or 2, **characterized in that** the triangular orifices are formed in the external flange (20).

5. The combustion chamber as claimed in claim 1 or 2, **characterized in that** the triangular orifices (62, 64) are formed in the internal and external flanges (18, 20).

6. The combustion chamber as claimed in one of the preceding claims, **characterized in that** the triangular orifices (62, 64) each have a rounded apex (68).

7. The combustion chamber as claimed in one of the preceding claims, **characterized in that** the triangular orifices (62, 64) are isosceles triangles, equilateral triangles or triangles of any shape.

8. The combustion chamber as claimed in one of the preceding claims, **characterized in that** the triangular orifices (62, 64) of one flange (18) comprise two rows of identical triangular orifices, in which the orifices each have a base (66) located on a circumference centered on the axis (A) of the chamber, the orifices (62, 64) being reversed from one row to another and the two rows being partially imbricated one in the other.

9. The combustion chamber as claimed in claim 8, **characterized in that** the circumferential distance c between the bases (66) of the triangular orifices (62, 64) of any one row is equal to or greater than 1.5 times the width d of the strip of material (70) that separates two successive orifices (62, 64).

10. The combustion chamber as claimed in claim 8 or 9, **characterized in that** the degree of partial imbrication of the two rows is determined by the ratio H₂/H₁, where H₁ is the distance between the base (66) of a triangular orifice and its opposite apex (68) and H₂ is the radial distance between the apexes (68) of two successive orifices, opposite their bases (66), this ratio H₂/H₁ being equal to or greater than 0.6.

11. The combustion chamber as claimed in one of claims 8 to 10, **characterized in that** the length L of the straight portion of the strip of material (70) between the rounded apexes (68) of two successive orifices (62, 64) is equal to or less than three times the width d of this strip.

12. The combustion chamber as claimed in one of claims 8 to 11, **characterized in that** the angle α at the apex of the triangular orifices (62, 64), opposite their bases (66), is equal to or greater than 20°.

13. The combustion chamber as claimed in one of claims 8 to 12, **characterized in that** the triangular orifices (62, 64) are formed in a frustoconical or radial annular portion of the flange (18), and the bases (66) of the orifices are separated from the internal and external edges (72, 74) of this annular portion by strips of material (76, 78) having a circumferential orientation, the widths of which are defined by a = d and b = H₂, where a is the radial width of the strip of material (78) between the base (66) of a triangular orifice (64) and the external edge (74) of the annular flange portion, d is the width of the strip of material (70) separating successive orifices (62, 64), b is the radial width of the strip of material (76) between the base (66) of a triangular orifice (62) and the internal edge (72) of the annular flange portion, and H₂ is the radial distance between the apexes (68) of two successive orifices (62, 64), opposite their bases (66).

14. A turbomachine, such as an aircraft turbojet or turboprop, **characterized in that** it includes a combustion chamber (10) as claimed in one of the preceding claims.

## Patentansprüche

1. Brennkammer einer Turbomaschine wie beispielsweise eines Turbotriebwerks oder eines Turboprop-Triebwerks eines Flugzeugs, die einen mit Brennstoffeinspritzmitteln ausgestatteten Kammerboden (17) sowie umlaufende Wände (14, 16) aufweist, welche den Kammerboden (17) mit einem inneren Befestigungsband (18) und einem äußeren Befestigungsband (20) zur Befestigung an einem Innen- und einem Außengehäuse (24) verbinden, wobei diese Befestigungsbänder (18, 20) ringförmige Teile aufweisen, die von Öffnungen für den Durchlass von Luft zur Kühlung von dahinter liegenden Komponenten durchsetzt sind, wobei diese Öffnungen von dreieckiger oder im Wesentlichen dreieckiger Form sind,
**dadurch gekennzeichnet,**
**dass** die Öffnungen (62, 64) mindestens eines der Befestigungsbänder (18, 20) im Zickzack angeordnet sind.

2. Brennkammer nach Anspruch 1,
**dadurch gekennzeichnet,**
**dass** die aufeinander folgenden dreieckigen Öffnungen (62, 64) im Zickzack und spatenkopfartig angeordnet sind.

3. Brennkammer nach Anspruch 1 oder 2,
**dadurch gekennzeichnet,**
**dass** die dreieckigen Öffnungen (62, 64) in dem inneren Befestigungsband (18) ausgebildet sind.

4. Brennkammer nach Anspruch 1 oder 2,
**dadurch gekennzeichnet,**
**dass** die dreieckigen Öffnungen (62, 64) in dem äußeren Befestigungsband (20) ausgebildet sind.

5. Brennkammer nach Anspruch 1 oder 2,
**dadurch gekennzeichnet,**
**dass** die dreieckigen Öffnungen (62, 64) in dem inneren Befestigungsband (18) und in dem äußeren Befestigungsband (20) ausgebildet sind.

6. Brennkammer nach einem der vorherigen Ansprüche,
**dadurch gekennzeichnet,**
**dass** die dreieckigen Öffnungen (62, 64) abgerundete Spitzen (68) haben.

7. Brennkammer nach einem der vorherigen Ansprüche,
**dadurch gekennzeichnet,**
**dass** die dreieckigen Öffnungen (62, 64) gleichschenklige, gleichseitige Dreiecke bilden oder beliebige andere Formen haben.

8. Brennkammer nach einem der vorherigen Ansprüche,
**dadurch gekennzeichnet,**
**dass** die dreieckigen Öffnungen (62, 64) eines Befestigungsbandes (18) zwei Reihen von identischen dreieckigen Öffnungen (62, 64) umfassen, wobei die Öffnungen jeweils eine Basis (66) aufweisen, die sich auf einer auf der Achse (A) der Kammer zentrierten Umkreislinie befindet, wobei die Öffnungen (62, 64) der einen Reihe gegenüber der anderen umgekehrt angeordnet sind und die beiden Reihen teilweise ineinander verzahnt angeordnet sind.

9. Brennkammer nach Anspruch 8,
**dadurch gekennzeichnet,**
**dass** der Umkreisabstand c zwischen den Basen (66) der dreieckigen Öffnungen (62, 64) einer und derselben Reihe größer als oder gleich dem 1,5-Fachen der Breite d des Materialstreifens (70) ist, der zwischen zwei aufeinander folgenden Öffnungen (62, 64) liegt.

10. Brennkammer nach Anspruch 8 oder 9,
**dadurch gekennzeichnet,**
**dass** der Grad der teilweisen Verzahnung der beiden Reihen durch das Verhältnis H₂/H₁ bestimmt ist, wobei H₁ der Abstand zwischen der Basis (66) einer dreieckigen Öffnung und deren gegenüberliegender Spitze (68) ist und H₂ der radiale Abstand zwischen den Spitzen (68) zweier aufeinander folgender Öffnungen, die deren Basen (66) gegenüber liegen, ist, wobei dieses Verhältnis H₂/H₁ größer als oder gleich 0,6 ist.

11. Brennkammer nach einem der Ansprüche 8 bis 10,
**dadurch gekennzeichnet,**
**dass** die Länge L des geradlinigen Teils des Materialstreifens (70) zwischen den abgerundeten Spitzen (68) von zwei aufeinander folgenden Öffnungen (62, 64) kleiner als oder gleich dem 3-Fachen der Breite d dieses Materialstreifens ist.

12. Brennkammer nach einem der Ansprüche 8 bis 11,
**dadurch gekennzeichnet,**
**dass** der Winkel α an der Spitze der dreieckigen Öffnungen (62, 64), die deren Basis (66) gegenüber liegt, größer als oder gleich 20° ist.

13. Brennkammer nach einem der Ansprüche 8 bis 12,
**dadurch gekennzeichnet,**
**dass** die dreieckigen Öffnungen (62, 64) in einem kegelstumpfförmigen oder radialen, ringförmigen Teil des Befestigungsbandes (18) gebildet sind, und die Basen (66) der Öffnungen sind von der Innenkante (72) und Außenkante (74) dieses ringförmigen Teils durch auf der Umkreislinie ausgerichtete Materialstreifen (76, 78) getrennt, deren Breiten durch a ≥ d und b ≤ H₂ definiert sind, wobei a die radiale Breite des Materialstreifens (78) zwischen der Basis (66) einer dreieckigen Öffnung (64) und der Außenkante (74) des ringförmigen Teils des Befestigungsbandes ist, d die Breite des Materialstreifens (70) ist, der zwei aufeinander folgende Öffnungen (62, 64) voneinander trennt, b die radiale Breite des Materialstreifens (76) zwischen der Basis (66) einer dreieckigen Öffnung (62) und der Innenkante (72) des ringförmigen Teils des Befestigungsbandes ist, und H₂ der radiale Abstand zwischen den Spitzen (68) zweier aufeinander folgender Öffnungen (62, 64), die deren Basen (66) gegenüber liegen, ist.

14. Turbomaschine wie beispielsweise ein Turbotriebwerk oder ein Turboprop-Triebwerk für Flugzeuge,
**dadurch gekennzeichnet,**
**dass** sie eine Brennkammer (10) nach einem der vorherigen Ansprüche aufweist.
